# EUROPÄISCHE PATENTANMELDUNG

(11) **EP 2 186 694 A1**
(43) Veröffentlichungstag der Anmeldung: **19.05.2010**
(21) Anmeldenummer: 08168955.6
(22) Anmeldetag: 12.11.2008
(51) Int. Cl.: B60R 25/10

(54) **Vorrichtung zur Identifikation von Gegenständen**

(71) Anmelder: Phaselus Yachting SA, 5969 Casella Postale (CH)
(72) Erfinder: Upazzoli, Roberto, 6963 Pregassona (CH)
(74) Vertreter: Fleuchaus, Michael A.

(57) **Zusammenfassung**

Eine Vorrichtung zur Identifikation von Gegenständen (1, 1', 1"), wobei die Gegenstände (1, 1', 1") mobil und mit einer Einrichtung (2) verstehen sind, wobei die Einrichtung (2) einen Sender (3') und/oder einen Empfänger (3") umfasst, wobei der Sender (3') Daten überträgt, welche von einer Einrichtung (2) eines anderen Gegenstands (1") empfangen werden und wobei die Daten Angaben über des Gegenstands (1') enthalten, ist im Hinblick auf eine erweiterte Identifikationsfunktionen derart ausgebildet, dass die Daten Informationen über den Gegenstand (1') enthalten, die eine unberechtigte Verwendung des Gegenstands (1') anzeigen.

## Beschreibung

Die Erfindung betrifft eine Vorrichtung zur Identifikation von Gegenständen, wobei die Gegenstände mobil und mit einer Einrichtung versehen sind, wobei die Einrichtung einen Sender und/oder einen Empfänger umfasst, wobei der Sender Daten überträgt, welche von einer Einrichtung eines anderen Gegenstands empfangen werden, und wobei die Daten Angaben über den Gegenstand enthalten.

Aus dem Stand der Technik sind verschiedene Systeme bekannt, mittels derer die Identifikation von Gegenständen ermöglicht wird. Als Beispiel ist das automatische Identifikationssystem-AISbekannt, dass die Sicherheit und das Flottenmanagement des Schiffsverkehrs verbessert. Dieses Identifikationssystem übermittelt Daten eines Schiffs an andere Schiffe. Die Daten sind hierbei in dynamische und statische Daten unterteilt. Beispiele für statische Daten sind das Rufzeichen und der Name des Schiffes oder aber die Länge und Breite, den Schiffstyp, die Maritime Mobile Service Identity- MMSI - oder die International-Maritime-Organization-Nummer - IMO-Nummer. Dynamische Schiffsdaten, die mittels des AIS übertragen werden, sind beispielsweise die aktuelle Schiffsposition, der Kurs über Grund- COG -, die Geschwindigkeit über Grund - SOG - sowie die Vorausrichtung. Des Weiteren können mittels des AIS-Systems Reisedaten, wie der Tiefgang, Hinweise auf eventuell an Bord befindliche Gefahrengüter, das Reiseziel und die geschätzte Ankunftszeit, übermittelt werden. Die Reisedaten werden hierbei manuell, beispielsweise von einem Offizier auf der Brücke, eingegeben.

Aus der DE 10 2006 031 571 A1 ist ein elektronisches Gerät für ein Fahrzeug oder einen Container bekannt, mittels dessen das Fahrzeug oder der Container überwacht und identifiziert werden kann. Hierzu ist eine elektronische Vorrichtung mit der Alarmanlage des Fahrzeugs gekoppelt. Im Falle eines Diebstahls kann ein entsprechendes Signal der Alarmanlage über die elektronische Vorrichtung an das elektronische Gerät gesendet werden und/oder von dem elektronischen Gerät aus in eine Speichereinheit der elektronischen Vorrichtung ausgelesen werden. Ein Diebstahlschutz wird beispielsweise dadurch erreicht, dass das elektronische Gerät auf die elektronische Vorrichtung einwirkt und somit das Betreiben des Fahrzeugs verhindert. Beispielsweise könnte bei einem Diebstahl per Fernsteuerung eine Geschwindigkeitsbegrenzung durch das elektronische Gerät gesetzt werden, welche die Geschwindigkeit des Fahrzeugs langsam und kontinuierlich auf null erniedrigt, so dass das Fahrzeug kontrolliert stehen bleibt. Ferner könnte beim Erkennen eines Diebstahls über das elektronische Gerät automatisch eine Polizeidienststelle bezüglich des Diebstahls informiert werden. Dies erfolgt mittels einer Short-Text-Message über ein Mobilfunknetz. Hierzu muss sich das gestohlene Fahrzeug jedoch in Reichweite eines Senders des Mobilfunknetzes befinden. Somit ist die Funktionalität der Diebstahlsicherung von den örtlichen Gegebenheiten abhängig, in denen sich das Fahrzeug aufhält.

Der vorliegenden Erfindung liegt die Aufgabe zu Grunde, eine Vorrichtung zur Identifikation von Gegenständen der eingangs genannten Art anzugeben, bei der erweiterte Identifikationsfunktionen ermöglicht sind.

Erfindungsgemäß wird die voran stehende Aufgabe durch eine Vorrichtung zur Identifikation von Gegenständen mit den Merkmalen des Patentanspruchs 1 gelöst. Danach ist die in Rede stehende Vorrichtung zur Identifikation von Gegenständen derart ausgestaltet und weitergebildet, dass die Daten Informationen über den Gegenstand enthalten, die eine unberechtigte Verwendung des Gegenstands anzeigen.

In erfindungsgemäßer Weise ist zunächst erkannt worden, dass man von einer Diebstahlsicherung von Gegenständen, die an örtliche Gegebenheiten gebunden ist, wie dies aus dem Stand der Technik bekannt ist, abgehen muss. Eine verbesserte Verfolgung des Gegenstandes, beispielsweise eines Schiffes oder eines Containers oder dergleichen kann dadurch erreicht werden, dass man Daten, die mittels eines Signals übermittelt werden, das bereits im umgebenden System verwendet wird, dahingehend modifiziert, dass die unberechtigte Verwendung des Gegenstandes mit den ohnehin übermittelten Daten übermittelt wird. Dies hat den Vorteil, dass die Person, welche den Gegenstand unberechtigt verwendet, keine Informationen darüber erhält, dass die unberechtigte Verwendung detektiert wurde. Dies führt dazu, dass die Person der unberechtigten Verwendung überführt werden kann, ohne dass sie vorgewarnt wird, und deshalb den Gegenstand nicht aus Frust oder Wut beschädigen oder zerstören kann. Dadurch ist ein verbesserter Schutz des Gegenstands erreicht.

Hinsichtlich einer besonders einfachen Ausgestaltung könnte es sich bei dem Sender und/oder dem Empfänger um ein AIS-System handeln. Es könnten hierbei AIS-Signale verwendet werden, die beispielsweise als Datenprotokoll im HDLC-Protokoll - High-level-Data-Link-Control-Protokoll - mit oder ohne festen Zeitrahmen gesendet werden. Somit ist gewährleistet, dass handelsübliche AIS-Systeme ohne weitere zusätzliche Erfordernisse verwendet werden können. Die Daten könnten dann durch eine entsprechende Software oder Endgeräte ähnlich einem Radarbild graphisch aufbereitet werden. Es sind jedoch zusätzlich oder alternativ weitere Statusindikatoren denkbar. Ein Vorteil der Verwendung des AIS-Systems ist, dass keine ständige Überwachung des Standort des Gegenstands erfolgt, sondern dieser in einer Art Ad-hoc-Netz lediglich dann identifiziert wird, wenn der Gegenstand in die Nähe eines anderen mit dem AIS-System ausgestatten Gegenstands kommt.

Im Rahmen einer wiederum einfachen Ausgestaltung könnten die Informationen einen Statusindikator umfassen. Dieser Statusindikator könnte verschiedene Ausgestaltungen haben, so könnte er die übermittelten Daten beispielsweise in rot einfärben. Ferner könnte der Statusindikator eine Indikatorinformation umfassen, beispielsweise könnte mit den Daten das Wort "Gestohlen", "Diebstahl" oder dergleichen übermittelt werden. Es könnten auch andere Informationen betreffend den Status des gestohlenen Gegenstands, beispielsweise der Zeitpunkt der Entwendung oder, falls der Gegenstand mit einem Global Positioning System - GPS - ausgerüstet ist, der Ort der Entwendung, übermittelt werden. Es könnte jedoch auch eine Kombination der verschiedenen Beispiele übermittelt werden.

Es wäre von besonderem Vorteil, wenn die Daten Informationen bezüglich der Position, der Bewegungsrichtung, der Geschwindigkeit, der Identifizierung oder dergleichen des Gegenstands umfassen. Dies wäre insbesondere dann gegeben, wenn ein AIS-System verwendet wird.

Im Rahmen einer wiederum einfachen Ausgestaltung könnten die Informationen in die Daten integriert sein, wenn ein Identifikationsmechanismus unbetätigt ist. Dieser Auslösemechanismus könnte ein manueller oder elektronischer Schalter sein, es könnte jedoch auch jegliche andere Form von Identifikation eines berechtigten Verwendens sein, wie beispielsweise ein Schlüssel in mechanischer oder elektronischer Form, die Eingabe von biometrische Daten oder dergleichen. In besonders vorteilhafter Weise könnte der Auslösemechanismus verdeckt angeordnet sein, so dass er nicht unmittelbar erkennbar ist. Der Identifikationsmechanismus könnte hierbei mechanisch betätigbar sein. Zusätzlich oder alternativ könnte der Identifikationsmechanismus auch elektronisch betätigbar sein.

In weiter vorteilhafter Weise könnte der Sender und/oder der Empfänger auf einer Frequenz von 13 MHz bis 300 MHz betreibbar sein. Insbesondere könnte der Sender und/oder der Empfänger auf einer Frequenz von 161,975 MHz oder 162,025 MHz betreibbar sein. Dies hätte den Vorteil, dass diese Signale von den bestehenden AIS-System empfangen und verarbeitet werden können. Insbesondere wäre es dann von Vorteil, wenn der Sender als Datenprotokoll HDLC verwenden würde. Alternativ könnte der Sender und/oder der Empfänger auf einer Frequenz von 117,975 MHz bis 137 MHz betreibbar ist. Diese Frequenzen entsprechen den Flugfunkfrequenzen.

Es gibt nun verschiedene Möglichkeiten die Lehre der vorliegenden Erfindung in vorteilhafter Weise auszugestalten und weiterzubilden. Dazu ist einerseits auf die Patentanspruch 1 nach geordneten Patentansprüche und andererseits auf die nachfolgende Erläuterung eines bevorzugten Ausführungsbeispiels der erfindungsgemäßen Vorrichtung anhand der Zeichnung zu verweisen. In Verbindung mit der Erläuterung des bevorzugten Ausführungsbeispiels der erfindungsgemäßen Vorrichtung zur Identifikation von Gegenständen anhand der Zeichnung werden auch im allgemeinen bevorzugte Ausgestaltungen und Weiterbildungen der Lehre erläutert. In der Zeichnung zeigt
- Fig. 1: in einer schematischen Ansicht ein Ausführungsbeispiel einer erfindungsgemäßen Vorrich- tung und
- Fig. 2: in einem Blockdiagramm, anhand dessen die Funktionsweise einer erfindungsgemäßen Vorrichtung ersichtlich ist.

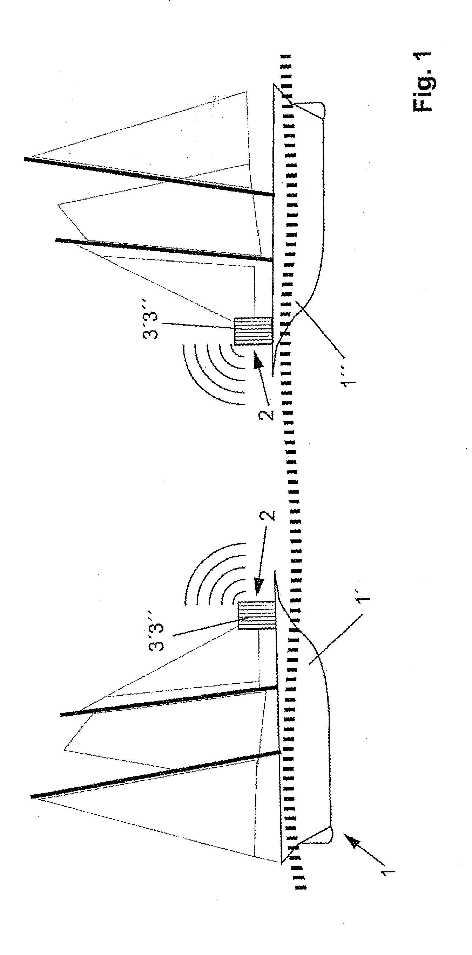

Die Vorrichtung zur Identifikation von Gegenständen 1, welche in Fig. 1 gezeigt ist, ist in diesem Ausführungsbeispiel an einem Schiff 1' verwendet. Die Vorrichtung umfasst eine Einrichtung 2, welche einen Sender 3' und einen Empfänger 3" aufweist, wobei der Sender 3' Daten überträgt, welche von einem anderen Schiff 1" empfangen werden. Die Daten enthalten Angaben über den Zustand des Schiffes 1'.

In erfindungsgemäßer Weise enthalten die Daten des Weiteren Informationen über das Schiff 1', die eine unberechtigte Verwendung des Schiffes 1' anzeigen. Hierzu enthalten die Informationen einen Statusindikator, aufgrund dessen die Daten, die vom Sender 3' übermittelt werden, rot gefärbt sind und zusätzlich ein Wort "Diebstahl" übermittelt wird. Diese Informationen sind in die Daten integriert, da ein - nicht dargestellter - Identifikationsmechanismus unbetätigt ist.

Der Identifikationsmechanismus ist in dem dargestellten Ausführungsbeispiel ein elektronischer Schalter, der beim Starten der Maschine des Schiffes 1' betätigt werden muss, um das Integrieren der Information in die Daten zu verhindern. Die Einrichtung 2 ist als AIS-System ausgestaltet, das auf einer Frequenz von 161,975 MHz sendet.

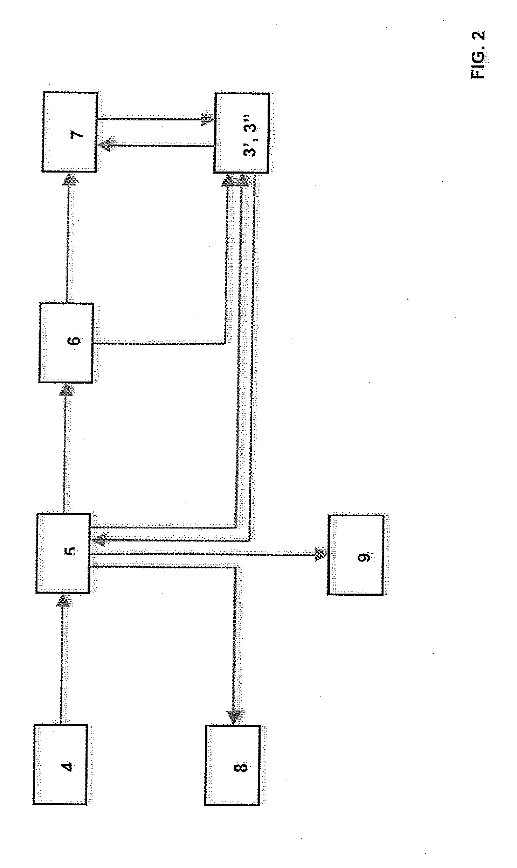

In Fig. 2 ist ein Blockdiagramm gezeigt, anhand dessen die Funktionsweise einer erfindungsgemäßen Vorrichtung erläutert wird. An dem Schiff 1' werden ein oder mehrere Sensoren 4, wie ein Bewegungsmelder, Panikschalter und/oder Brandmelder oder dergleichen, angeordnet. Dieser Sensor 4 wird mittels einer hier nicht dargestellten Schalteinheit aktiviert und mittels einer Steuereinheit 5 überwacht. Erfolgt eine Zustandsänderung des Sensors 4 oder wird ein vorgegebener Zustand detektiert, so mittels der Steuereinheit 5 ein Signal zu einem AIS-Systems 6 oder einem Funktranspondersystem und/oder zu einem Sender 3' übermittelt. Der Sender 3' und/oder Empfänger 3" könnte hierbei separater oder integraler ein Teil des AIS-Systems 6 sein. Der vorgegebene Zustand könnte erfindungsgemäß ein Diebstahl, ein Überfall oder der Ausbruch eines Feuers oder dergleichen sein. Der Sender 3' könnte über eine Antenne 7 an einen Empfänger 3" Daten übermitteln, die Informationen über den vorgegebenen Zustand, beispielsweise den Diebstahl, enthalten.

Des Weiteren könnte es möglich sein, dass die Steuerung mittels eines GMS-Moduls 8 eine Nachricht in Form einer SMS oder eines Anrufs an ein Telefon, zum Beispiel ein Handy, übermittelt. Darüber hinaus könnte es mittels der Steuereinheit 5 möglich sein, dass der Motor 9 gestoppt wird, zum Beispiel durch ein an die Steuereinheit 5 per Funk oder GMS-Signal übermitteltes Signal. Es könnten auch weitere Aktionen durch die Steuereinheit 5 ausgeführt werden. Die Steuereinheit 5 könnte hierbei bidirektional, dass heißt Signale empfangen und senden, ausgestaltet sein, wobei die Steuereinheit 5 hierbei Signale vom Sender 3' und/oder dem Empfänger 3" sowie vom AIS-System 6 empfangen könnte. Ferner könnte das GSM-Modul 8 zum Senden und Empfangen von Signalen die Antenne 7 nutzen.

Hinsichtlich weiterer Details wird zur Vermeidung von Wiederholung auf die allgemeine Beschreibung verwiesen.

Schließlich sei ausdrücklich darauf hingewiesen, dass das voran stehend beschriebene Ausführungsbeispiel lediglich zur Erörterung der beanspruchten Lehre dient, diese jedoch nicht auf das Ausführungsbeispiel einschränkt.

## Patentansprüche

1. Vorrichtung zur Identifikation von Gegenständen (1, 1', 1"), wobei die Gegenstände (1, 1', 1") mobil und mit einer Einrichtung versehen sind, wobei die Einrichtung einen Sender und/oder einen Empfänger umfasst, wobei der Sender (3') Daten überträgt, welche von einer Einrichtung (2) eines anderen Gegenstands (1") empfangen werden, und wobei die Daten Angaben über den Zustand des Gegenstands (1') enthalten,
**dadurch gekennzeichnet, dass** die Daten Informationen über den Gegenstand (1') enthalten, die eine unberechtigte Verwendung des Gegenstands (1') anzeigen.

2. Vorrichtung zur Identifikation von Gegenständen(1, 1', 1") nach Patentanspruch 1, **dadurch gekennzeichnet, dass** es sich bei dem Sender (3') und/oder dem Empfänger (3") um ein AIS-System handelt.

3. Vorrichtung zur Identifikation von Gegenständen (1, 1', 1") nach Patentanspruch 1 oder 2, **dadurch gekennzeichnet, dass** die Informationen einen Statusindikator umfassen, der die unberechtigte Verwendung anzeigt.

4. Vorrichtung zur Identifikation von Gegenständen(1, 1', 1") nach einem der Patentansprüche 1 bis 3, **dadurch gekennzeichnet, dass** die Daten Informationen bezüglich der Position, der Bewegungsrichtung, der Geschwindigkeit, der Identifizierung oder dergleichen umfassen.

5. Vorrichtung zur Identifikation von Gegenständen (1, 1', 1") nach einem der Patentansprüche 1 bis 4, **dadurch gekennzeichnet, dass** die Informationen in die Daten integriert sind, wenn ein Identifikationsmechanismus unbetätigt ist.

6. Vorrichtung zur Identifikation von Gegenständen (1, 1', 1") nach einem der Patentansprüche 1 bis 5, **dadurch gekennzeichnet, dass** der Identifikationsmechanismus mechanisch betätigbar ist.

7. Vorrichtung zur Identifikation von Gegenständen (1, 1', 1") nach einem der Patentansprüche 1 bis 6, **dadurch gekennzeichnet, dass** der Identifikationsmechanismus elektronisch betätigbar ist.

8. Vorrichtung zur Identifikation von Gegenständen (1, 1', 1") nach einem der Patentansprüche 1 bis 7, **dadurch gekennzeichnet, dass** der Sender (3') und/oder der Empfänger (3") auf einer Frequenz von 30 MHz bis 300 MHz betreibbar ist.

9. Vorrichtung zur Identifikation von Gegenständen (1, 1', 1") nach Patentanspruch 8,
**dadurch gekennzeichnet, dass** der Sender (3') und/oder der Empfänger (3") auf einer Frequenz von 161,975 MHz oder 162,025 MHz betreibbar ist.

10. Vorrichtung zur Identifikation von Gegenständen (1, 1', 1") nach Patentanspruch 8,
**dadurch gekennzeichnet, dass** der Sender (3') und/oder der Empfänger (3") auf einer Frequenz von 117,975 MHz bis 137 MHz betreibbar ist.

## Geänderte Patentansprüche

### Geänderte Patentansprüche gemäss Regel 137(2) EPÜ.

**1.** Vorrichtung zur Identifikation von Gegenständen (1, 1', 1"), wobei die Gegenstände (1, 1', 1") mobil und mit einer Einrichtung versehen sind, wobei die Einrichtung einen Sender und/oder einen Empfänger umfasst, wobei der Sender (3') Daten überträgt, welche von einer Einrichtung (2) eines anderen mobilen Gegenstands (1") empfangen werden, und wobei die Daten Angaben über den Zustand des Gegenstands (1') enthalten, **dadurch gekennzeichnet, dass** die Daten Informationen über den Gegenstand (1') enthalten, die eine unberechtigte Verwendung des Gegenstands (1') anzeigen und dass es sich bei dem Sender (3') und/oder dem Empfänger (3") um ein AIS-System handelt.

**2.** Vorrichtung zur Identifikation von Gegenständen (1, 1', 1") nach Patentanspruch 1, **dadurch gekennzeichnet, dass** die Informationen einen Statusindikator umfassen, der die unberechtigte Verwendung anzeigt.

**3.** Vorrichtung zur Identifikation von Gegenständen(1, 1', 1") nach Patentanspruch 1 oder 2, **dadurch gekennzeichnet, dass** die Daten Informationen bezüglich der Position, der Bewegungsrichtung, der Geschwindigkeit, der Identifizierung oder dergleichen umfassen.

**4.** Vorrichtung zur Identifikation von Gegenständen (1, 1', 1") nach einem der Patentansprüche 1 bis 3, **dadurch gekennzeichnet, dass** die Informationen in die Daten integriert sind, wenn ein Identifikationsmechanismus unbetätigt ist.

**5.** Vorrichtung zur Identifikation von Gegenständen (1, 1', 1") nach einem der Patentansprüche 1 bis 4, **dadurch gekennzeichnet, dass** der Identifikationsmechanismus mechanisch betätigbar ist.

**6.** Vorrichtung zur Identifikation von Gegenständen (1, 1', 1") nach einem der Patentansprüche 1 bis 5, **dadurch gekennzeichnet, dass** der Identifikationsmechanismus elektronisch betätigbar ist.

**7.** Vorrichtung zur Identifikation von Gegenständen (1, 1', 1") nach einem der Patentansprüche 1 bis 6, **dadurch gekennzeichnet, dass** der Sender (3') und/oder der Empfänger (3") auf einer Frequenz von 30 MHz bis 300 MHz betreibbar ist.

**8.** Vorrichtung zur Identifikation von Gegenständen (1, 1', 1") nach Patentanspruch 7, **dadurch gekennzeichnet, dass** der Sender (3') und/oder der Empfänger (3") auf einer Frequenz von 161,975 MHz oder 162,025 MHz betreibbar ist.

**9.** Vorrichtung zur Identifikation von Gegenständen (1, 1', 1") nach Patentanspruch 7, **dadurch gekennzeichnet, dass** der Sender (3') und/oder der Empfänger (3") auf einer Frequenz von 117,975 MHz bis 137 MHz betreibbar ist.
